# FASCICULE DE BREVET EUROPEEN

(11) **EP 0 746 440 B1**
(45) Date de publication et mention de la délivrance du brevet: **28.01.1998**
(21) Numéro de dépôt: 95942766.7
(22) Date de dépôt: 19.12.1995
(51) Int. Cl.: B23K 1/00, B62K 19/20

(54) **PROCEDE DE REALISATION DE CADRES DE CYCLES, CYCLOMOTEURS OU VEHICULES SIMILAIRES ET CADRES AINSI REALISES**
VERFAHREN ZUR HERSTELLUNG VON FAHRRAD-,MOTORRAD- UND ÄHNLICHEN FAHRZEUGRAHMEN UND SO HERGESTELLTE RAHMEN
METHOD FOR MAKING FRAMES FOR BICYCLES, MOTORBIKES AND SIMILAR VEHICLES, AND RESULTING FRAMES

(30) Priorité: 20.12.1994 FR 9415665
(43) Date de publication de la demande: 11.12.1996
(73) Titulaire: CYCLOR Société Anonyme, 94130 Nogent-sur-Marne (FR); A.M.L-MICROTECHNIQUE LORRAINE, 57159 Marange-Silvange (FR)
(72) Inventeur: LETIERCE, Camille, F-92600 Asnières (FR); LIMBACH, Fabrice, F-57000 Metz (FR)
(74) Mandataire: Vuillermoz, Bruno
(86) Numéro de dépôt international: FR9501693
(87) Numéro de publication internationale: WO9619312

(56) Documents cités:
- EP-A- 0 524 599
- FR-A- 978 464
- FR-A- 1 128 582

## Description

La présente invention a trait à un procédé perfectionné permettant la réalisation de cadres de bicyclettes ou tout autre véhicule comportant un châssis constitué de tubes métalliques, en aluminium notamment.

De très nombreuses propositions ont été faites pour réaliser l'assemblage et le raccordement d'éléments tubulaires en vue de réaliser un cadre de cycle.

La technique la plus répandue pour réaliser des cadres de cycles, consiste à assembler les différents tubes constituant ledit cadre par leur extrémité au moyen de manchons ou raccords introduits à l'intérieur des tubes ou autour de l'extrémité de ces derniers, la liaison définitive étant assurée soit par soudure, soit par collage, notamment dans le cas où les tubes constitutifs du cadre sont en métal léger, aluminium notamment, comme cela ressort du FR-A-2 318 333 et FR-A-2 245 520 et US-A-4 047 731.

La technique d'assemblage par collage est particulièrement adaptée lors de la réalisation de cadres légers en aluminium ou en matériau composite, mais est cependant délicate à mettre en oeuvre.

La technique d'assemblage par soudage ou brasage est, comme cela ressort du FR-A-2 318 333, lorsqu'elle est appliquée à des matériaux légers non ferreux, par exemple à base d'aluminium, délicate à mettre en oeuvre, l'élévation de température fragilisant l'alliage et détériorant l'état de surface.

Or on a trouvé, et c'est ce qui fait l'objet de la présente invention, un procédé simple, économique à mettre en oeuvre, qui permet de réaliser des cadres de bicyclettes à base de matériaux légers non ferreux, par exemple en aluminium, la liaison entre les tubes élémentaires constituant ledit cadre étant réalisée par soudage qui présente des caractéristiques mécaniques équivalentes à celle des cadres comportant des raccords de liaison entre les différents tubes et ce sans fragilisation au niveau des zones de liaison.

Une telle possibilité est obtenue conformément au procédé selon l'invention d'une part, en positionnant les différents tubes les uns par rapport aux autres d'une manière bien spécifique et d'autre part, en utilisant comme technique de soudure la technique de soudobrasage au bain de sels ou tout autre flux équivalent.

D'une manière générale, le procédé conforme à l'invention consiste à pré-assembler les différents éléments entrant dans la constitution du cadre en interposant au niveau des zones de jonction une couche de métal d'apport puis, à plonger l'ensemble pré-assemblé dans un bain de sels porté à une température intermédiaire entre la température de fusion du métal constituant les tubes et celle du métal d'apport, permettant ainsi d'assurer la liaison des différents éléments entre eux, et il se *caractérise* en ce que :
- les tubes élémentaires sont positionnés les uns par rapport aux autres de telle sorte que la liaison soit réalisée par contact en bout d'un tube contre la surface périphérique de l'élément qui lui est associé et/ou par pénétration totale ou partielle à l'intérieur de ce dernier, le métal d'apport étant interposé au niveau des zones de contact ;
- l'élément servant d'appui comporte un orifice situé à l'intérieur de la zone de jonction permettant la circulation du bain de sels à l'intérieur de la totalité du cadre lors de l'opération de soudobrasage.

Selon une forme préférentielle de mise en oeuvre conforme à l'invention, des cloisonnements internes sont prévus à chaque extrémité des tubes en appui, lesdits cloisonnements étant soudés latéralement contre la paroi du tube à l'intérieur duquel ils sont disposés ainsi que par leur base contre la surface de l'élement contre lequel le tube est en appui.

Enfin, des renforts additionnels peuvent éventuellement être prévus à l'extérieur des zones de jonction.

L'invention et les avantages qu'elle apporte seront cependant mieux compris grâce à l'exemple de réalisation donné ci-après à titre indicatif et non limitatif et qui est illustré par les schémas annexés, dans lesquels :
- la figure 1 est une vue schématique en élévation d'un cadre réalisé conformément au procédé selon l'invention ;
- les figures 2 et 3 sont respectivement des vues éclatées et en perspective montrant la manière dont est réalisé l'assemblage des tubes, par exemple au niveau du boitier de pédalier ;
- les figures 4 et 5 sont des vues schématiques de côté montrant différents types de renfort externe que peut comporter un cadre conforme à l'invention au niveau de la douille de direction ;
- les figures 6 et 7 sont des vues en coupe et de dessus illustrant la manière dont est réalisée la jonction au niveau du tube de selle ;
- les figures 8 et 9 sont des vues en coupe illustrant l'assemblage par pénétration totale ou partielle d'un tube élémentaire à l'intérieur d'un tube support.

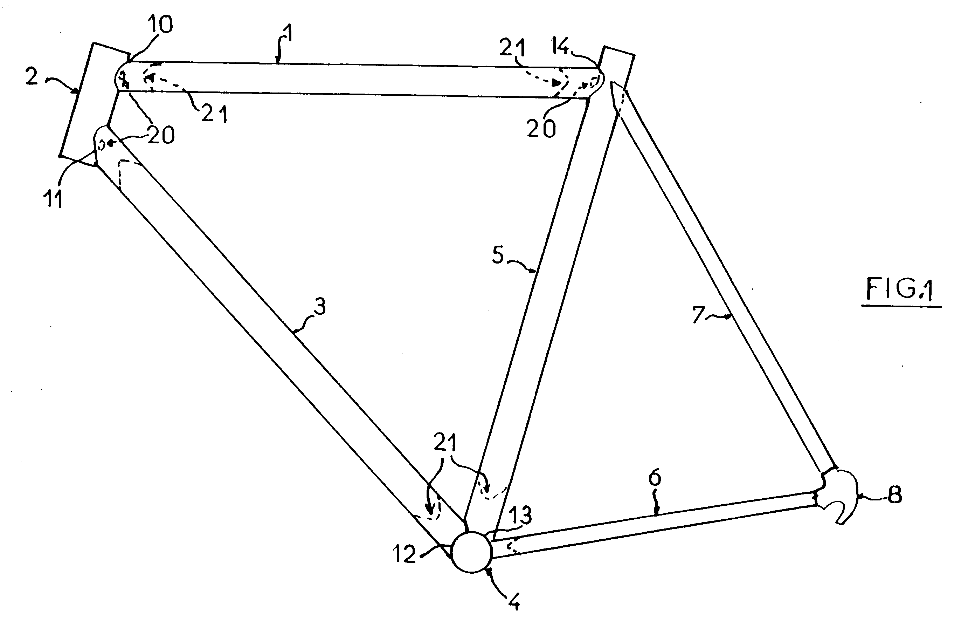

En se reportant aux schémas annexés et plus particulèrement à la figure 1, le cadre de bicyclette réalisé conformément à l'invention se compose essentiellement d'un tube horizonal supérieur (1), d'une douille de direction (2), d'un tube diagonal (3), d'un boitier de pédalier (4), d'un tube vertical (5), d'une paire de bases (6) et haubans (7) comportant à leur extrémité des pattes (8) pour la fixation de la roue arrière.

Sur cet ensemble, est montée d'une part la fourche supportant la roue avant et le guidon, et d'autre part, la selle et le pédalier, éléments non représentés par mesure de simplification.

Pour réaliser un tel cadre, conformément au procédé faisant l'objet de l'invention, on utilisera des éléments classiques tels que :
- des tubes en aluminium ayant un diamètre externe pouvant varier de 35 mm à 50 mm et une épaisseur de paroi de 1 à 1,5 mm pour le tube horizontal, le tube diagonal et le tube vertical ;
- des tubes ayant un diamètre externe de 16 mm à 20 mm et une épaisseur de paroi de 1 à 1,5 mmpour réaliser les bases et haubans ;
- une douille de direction obtenue par usinage dans un tube et un boitier de pédalier obtenu par estampage, moulage avec usinage ou par usinage direct sur un tube.

L'association de ces différents éléments est obtenue non pas en utilisant des raccords, mais par soudure en bout des extrémités des éléments tubulaires entrant dans la constitution du cadre contre la surface périphérique d'autres éléments, un métal d'apport étant interposé au niveau de cette zone de jonction.

Dans l'exemple de réalisation illustré, la douille de direction (2) sert de surface d'appui aux extrémités (10,11) du tube supérieur horizontal (1) et du tube diagonal (3).

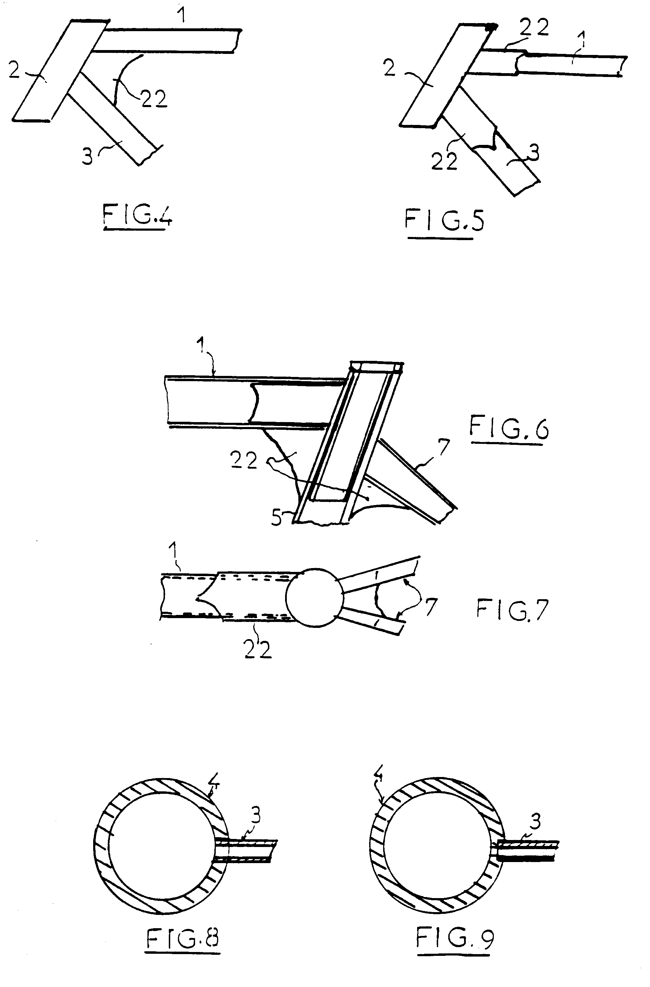

Les extrémités (12) du tube diagonal (3), l'extrémité (13) du tube vertical (5) peuvent être soit en appui contre la surface du boitier (4), soit comme cela ressort de la figure 8 en pénétration totale à l'intérieur du boitier, soit comme cela ressort de la figure 9, en pénétration partielle à l'intérieur de ce dernier.

La seconde extrémité (14) du tube supérieur horizontal (1) s'appuie quant à elle contre la surface du tube vertical (5).

Les bases (6) et haubans (7) sont en appui ou en pénétration totale ou partielle respectivement contre la surface du boitier de pédalier (4) et du tube vertical (5). Ces différents élements sont pré-assemblés entre eux par exemple sur un gabarit de montage en interposant le métal d'apport au niveau des zones de jonction. Des orifices désignés par la même référence (20) sont prévus sur les surfaces d'appui à l'intérieur des zones de jonction, permettant ainsi de mettre en communication les différents éléments constituant le cadre.

Lors du pré-assemblage, il est avantageux de prévoir à l'intérieur des extrémités de chaque tube, des cloisonnements internes, désignés par la même référence générale (21), se présentant sous la forme de plaquettes dont la largeur est égale au diamètre interne de chaque élément tubulaire. Du métal d'apport est également prévu le long des zones de contact entre ces cloisonnements (21) et la surface interne des tubes.

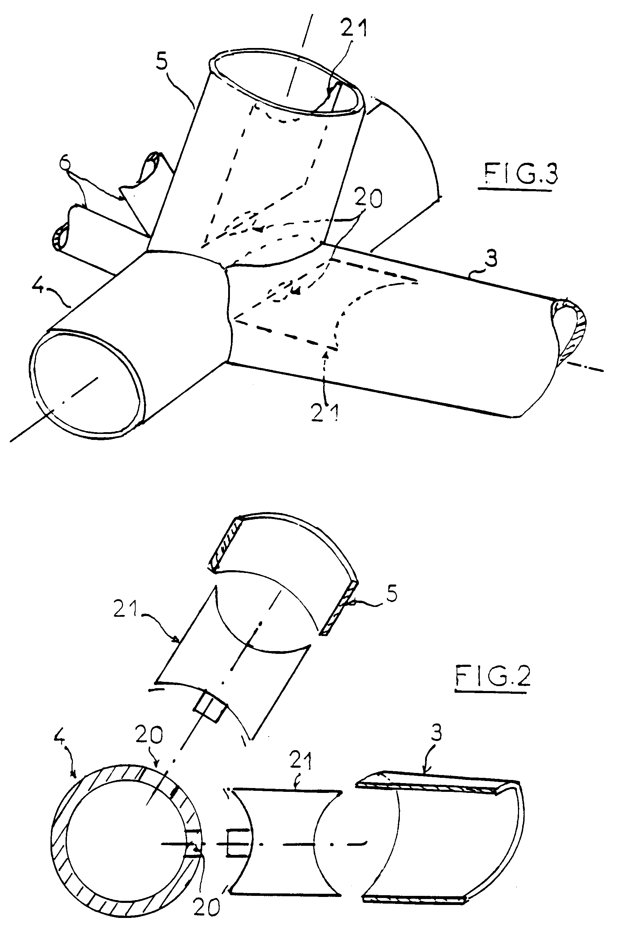

Selon une forme de réalisation préférentielle qui ressort de la figure 2, ces cloisonnements sont positionnés sur les surfaces d'appui, par exemple sur la surface du boitier de pédalier (4) (voir figures 2 et 3), en s'emboitant dans l'orifice (20) permettant la circulation du bain de sels.

Il peut être envisagé également de positionner des renforts additionnels, tels que par exemple des renforts internes (21) au niveau de la jonction du tube supérieur horizontal, soit des renforts externes (22). Il est également possible d'incorporer à l'intérieur du tube, et ce à n'importe quel niveau sur sa longueur, des cloisonnements additionnels, par exemple pour renforcer une zone prédéterminée.

L'ensemble des différents éléments entrant dans la constitution du cadre étant ainsi montés et pré-assemblés, soit par des points de collage ou par des points de soudure, le cadre est enlevé de son gabarit de montage pour être ensuite traité, de manière conventionnelle dans une installation permettant le soudobrasage au bain de sels, et ce de manière conventionnelle.

Après brasage, on obtient une liaison parfaite de l'ensemble des différents éléments entrant dans la constitution du cadre ne nécessitant aucune reprise au niveau des zones de soudure.

Par rapport aux cadres antérieurs réalisés par collage, le procédé selon l'invention permet d'éviter l'utilisation d'éléments de raccordement et conduit donc à un allègement du cadre et à une diminution des coûts, sans altérer les caractéristiques mécaniques.

Bien entendu, l'invention n'est pas limitée à l'exemple de réalisation, mais elle en couvre toutes les variantes qui tombent dans l'objet des revendications.

## Revendications

1. Procédé de réalisation de cadres de cycles ou véhicules comportant un châssis constitué à partir de tubes (1-7) en matériau léger non ferreux tels que ceux à base d'aluminium, qui consiste à pré-assembler les différents éléments entrant dans la constitution dudit cadre en interposant au niveau des zones de jonction une couche de métal d'apport puis, à plonger l'ensemble pré-assemblé dans un bain de sels porté à une température intermédiaire entre la température de fusion du métal constituant les tubes et celle du métal d'apport, permettant ainsi d'assurer la liaison des différents éléments entre eux, *caractérisé* en ce que :
- les tubes élémentaires (1,2,3,4,5,6,7) sont positionnés les uns par rapport aux autres de telle sorte que la liaison soit réalisée par contact en bout d'un tube contre la surface périphérique de l'élément qui lui est associé et/ou par pénétration totale ou partielle à l'intérieur de ce dernier, le métal d'apport étant interposé au niveau des zones de contact ;
- l'élément servant d'appui comporte un orifice (20) situé à l'intérieur de la zone de jonction permettant la circulation du bain de sels à l'intérieur de la totalité du cadre lors de l'opération de soudobrasage.

2. Procédé selon la revendication 1, caractérisé en ce que des cloisonnements internes (21) sont disposés à chaque extrémité des tubes en appui, lesdits cloisonnements étant soudés latéralement contre la paroi du tube à l'intérieur duquel ils sont disposés ainsi que par leur base contre la surface de l'élement contre lequel le tube est en appui.

3. Procédé selon l'une des revendications 1 et 2, caractérisé en ce que des renforts additionnels (22) sont disposés à l'extérieur des zones de jonction.

## Claims

1. Method for producing frames for cycles or vehicles including a chassis constructed from tubes (1-7) of lightweight non-ferrous material, such as those based on aluminum, which consists in pre-assembling the various elements used in the construction of said frame, interposing a layer of filler metal at the region of the joints, and in then immersing the pre-assembled assembly in a bath of salts which is brought up to a temperature somewhere between the melting point of the metal forming the tubes and that of the filler metal, thus making it possible to join the various elements together, ***characterized*** in that:
- the elemental tubes (1, 2, 3, 4, 5, 6, 7) are positioned relative to each other such that the joint is achieved by the end of one tube butting against the peripheral surface of the element associated with it and/or by complete or partial penetration inside the latter, the filler metal being interposed at the regions of contact;
- the element butted against has an orifice (20) situated within the joint region, allowing the salts bath to flow around inside the entire frame during the braze welding operation.

2. Method according to claim 1, characterized in that internal partitions (21) are arranged at each end of the abutting tubes, said partitions being welded laterally against the wall of the tube inside which they are arranged as well as being welded via their base against the surface of the element against which the tube abuts.

3. Method according to claims 1 and 2, characterized in that additional reinforcements (22) are arranged on the outside of the joint regions.

## Patentansprüche

1. Verfahren zur Herstellung von Rahmen für Fahrräder oder Fahrzeuge mit einem Gestell, welches aus Rohren ( 1 - 7) aus einem leichten, Nicht-Eisen-Material wie Aluminiummaterialien gebildet ist, bestehend aus dem Vormontieren der verschiedenen, in den Aufbau des Rahmens eingehenden Elemente, wobei im Bereich der Verbindungszonen eine Schicht aus Auftragsmetall zwischengefügt wird, und anschließendem Eintauchen der vormontierten Anordnung in ein Salzbad, welches bei einer Temperatur zwischen der Schmelztemperatur des die Rohre bildenden Metalls und der Schmelztemperatur des Auftragsmetalls gehalten wird, wodurch die Verbindung der verschiedenen Elemente miteinander sichergestellt wird, **dadurch gekennzeichnet,** daß
- die Elementar-Rohre (1,2,3,4,5,6,7) derart zueinander angeordnet sind, daß die Verbindung durch Kontakt des Endes eines Rohres gegen die periphere Oberfläche des ihm zugeordneten Elementes und/oder durch vollständiges oder teilweises Eindringen in das Innere des letzteren realisiert ist, wobei das Auftragsmetall im Bereich der Kontaktzonen zwischengefügt ist;
- das Element, welches als Abstützung dient, eine Öffnung (20) aufweist, die im Inneren der Verbindungszone angeordnet ist und das Zirkulieren des Salzbades im Inneren der Gesamtheit des Rahmens während des Vorgangs des Schweißlötens ermöglicht.

2. Verfahren nach Anspruch 1, **dadurch gekennzeichnet,** daß innere Trennwände (21) an jedem abgestützten Ende der Rohre angeordnet sind, wobei die genannten Trennwände seitlich gegen die Wand des Rohres geschweißt sind, in dessen Inneren sie angeordnet sind,und außerdem mit ihrer Basis gegen die Oberfläche des Elementes, gegen das sich das Rohr abstützt, geschweißt sind.

3. Verfahren nach einem der Ansprüche 1 und 2, **dadurch gekennzeichnet,** daß zusätzliche Verstärkungen (22) an der Außenseite der Verbindungszonen angeordnet sind.
